# NEUE EUROPÄISCHE PATENTSCHRIFT

(11) **EP 0 445 192 B2**
(45) Veröffentlichungstag und Bekanntmachung des Hinweises auf die Entscheidung über den Einspruch: **09.12.1998**
(45) Hinweis auf die Patenterteilung: 08.11.1995
(21) Anmeldenummer: 89913261.7
(22) Anmeldetag: 18.11.1989
(51) Int. Cl.: C08G 18/00, C08L 75/04, C09D 175/04, C09J 175/04

(54) **WÄSSRIGE POLYURETHAN- BZW. POLYURETHANHARNSTOFFDISPERSIONEN, VERFAHREN ZUM BEFLOCKEN ELASTOMERER FORMKÖRPER SOWIE ZUR HEISSVERSIEGELUNG VON TEXTILEN FLÄCHENGEBILDEN UNTER VERWENDUNG DIESER DISPERSIONEN**
AQUEOUS POLYURETHANE AND POLYURETHANE CARBAMIDE DISPERSIONS, AND A PROCESS FOR FLOCK-COATING MOULDED ELASTOMERIC PRODUCTS AND FOR HEAT-SEALING TEXTILE ARTICLES USING THESE DISPERSIONS
DISPERSION AQUEUSE DE POLYURETHANE OU DE POLYURETHANE-UREE, PROCEDE DE REVETEMENT PAR FLOCAGE DE PREFORMES ELASTOMERES ET DE SCELLEMENT A CHAUD DE TEXTILES A L'AIDE DE CETTE DISPERSION

(30) Priorität: 26.11.1988 DE 3839940; 09.02.1989 DE 3903796
(43) Veröffentlichungstag der Anmeldung: 11.09.1991
(73) Patentinhaber: Stockhausen, Dolf, Dr., 47800 Krefeld (DE)
(72) Erfinder: STOCKHAUSEN, Dolf, D-4150 Krefeld (DE); DAHMAN, Kurt, D-4050 Mönchengladbach-Rheydt (DE); NAGORSKI, Herbert, D-4152 Kempen - St. Hubert (DE); STUKENBROK, Karl-Heinz, D-4054 Nettetal 1 (DE); SCHLÖSSER, Herbert, D-4154 Tönisvorst I (DE)
(74) Vertreter: Klöpsch, Gerald, Dr.-Ing. Patentanwalt
(86) Internationale Anmeldenummer: EP8901394
(87) Internationale Veröffentlichungsnummer: WO9006330

(56) Entgegenhaltungen:
- EP-A- 220 000
- EP-A- 0 151 661
- EP-A- 0 219 677
- EP-A- 0 292 750
- EP-A- 0 324 370
- EP-B- 355 682
- DE-A- 1 282 962
- DE-A- 2 637 690
- DE-A- 2 744 544
- DE-A- 3 641 494
- DE-A- 3 839 940
- US-A- 4 147 679
- US-A- 4 203 883

## Beschreibung

Die Erfindung betrifft spezielle wäßrige PU-Dispersionen, ihre Verwendung als Flockkleber auf Gummimaterialien wie Synthesekautschuk (SBR), Chloropren-Kautschuk und Ethylen-Propylen-Dien-Mischpolymerisaten (EPDM) sowie zur Heißversiegelung von textilen Flächengebilden.

Die Oberflächenveredlung verschiedenster Substrate, wie Textilien, Leder, Papier, Kunststoffe, Metalle, Holz, usw., durch Beflocken ist heute weitverbreitet. Dabei wird das zu veredelnde Substrat zunächst mit einem Klebstoff beschichtet, in den dann Faserteilchen eingetragen, insbesondere elektrostatisch eingeschossen werden. Durch abschließende Trocknung und ggfs. Härtung (Vernetzung) des Klebers werden die Fasern fest verankert. Die Eigenschaften und die Dauerhaftigkeit der so veredelten Oberfläche hängen sowohl von den verwendeten Faserteilchen als auch vom sog. Flock-Klebstoff ab.

Um ein den Anforderungen entsprechendes Qualitätsprofil zu erhalten, muß der Flockkleber bestimmte Voraussetzungen erfüllen. Als Grundvoraussetzung gilt, daß der Klebstoff eine gute Adhäsion sowohl zum Trägermaterial als auch zur Flockfaser entwickeln muß. Desweiteren werden in der Regel hohe Trockenund Naßabriebfestigkeiten, hohe Alterungs- und UV-Beständigkeiten sowie gute Beständigkeit gegenüber Wasser, Wasch- und Reinigungsmitteln, Ölen, Fetten, organischen Lösungsmitteln, etc. gefordert. Darüber hinaus sollten die Flock-Klebstoffe leicht zu handhaben sein und sich einfach und problemlos verarbeiten lassen.

Die Auswahl des Klebstoffs richtet sich nach der Beflockungstechnologie, der verwendeten Flockart, den gewünschten Eigenschaften des Fertigproduktes und nicht zuletzt nach der Art des zu beflockenden Trägermaterials.

Für die Beflockung von Gummimaterialien wie bspw. der insbesondere im Automobilbau (z.B. als Fenster- bzw. Türdichtung) verwendeten Substrate wie Styrol-Butadien-Synthesekautschuk, Chloropren-Kautschuk oder Ethylen-Propylen-Dien-Mischpolymerisaten (EPDM) werden z.B. in organischen Lösungsmitteln gelöster Chloroprenkautschuk als Kleber eingesetzt.

Ebenso finden in organischen Lösungsmitteln gelöste Polyurethanpolymere als Flockkleber für vulkanisierte und unvulkanisierte Gummimaterialien Verwendung (DE 3145861 und DE 3508995). In den Deutschen Offenlegungsschriften DE 3322695 und DE 3400340 werden Polyurethan-Prepolymere mit endständigen Isocyanatgruppen als Beflockungskleber für unpolare Elastomere beansprucht. Nach den Ausführungen dieser Schriften ist die Verwendung dieser Prepolymere prinzipiell in ungelöster, unverdünnter Form möglich. Aufgrund der besseren Anwendung werden diese Prepolymere jedoch bevorzugt in Form von Lösungen bzw. Dispersionen in organischen Lösungsmitteln eingesetzt.

Aus Gründen der Gesundheitsgefährdung sowie der Brand- und Explosionsgefahr bei Verwendung lösungsmittelhaltiger Klebstoffe und vor allen Dingen aufgrund neuer Umweltschutzbestimmungen besteht der Wunsch, wäßrige Klebstoffsysteme für die Beflockung von Gummimaterialien zu verwenden.

Es ist auch seit langem bekannt, thermoplastische Kunststoffe wie z.B. Polyethylen, PVC, Polyamide oder auch Polyvinylacetat-Polyethylen-Copolymere zur Heißversiegelung von textilen Flächengebilden zu verwenden. Die Eigenschaften dieser Thermoplaste erfüllen häufig nicht die gestellten Anforderungen, so daß gute Heißsiegelverklebungen in der Regel nur mit maßgeschneiderten Klebersystemen erzielt werden, und daß die breite Anwendung der bekannten Heißsiegelkleber oft nur zu Kompromißlösungen führt. Gute Verklebungen mit insbesondere guter Beständigkeit gegenüber Reinigung mit Lösungsmitteln und gegenüber Wäsche mit üblichen Waschmitteln werden u.a. bei Einsatz von Polyurethanen als Heißsiegelkleber erreicht. Für die Verwendung von Polyurethanen als Heißsiegelkleber wird in der Regel von pulverförmigen Produkten ausgegangen, die nach zwei unterschiedlichen Verfahren gewonnen werden.

Nach DE 17 69 482, DE 19 30 340, DE 23 42 149 und DE 34 01 129 werden feste Polyurethane unter starker Kühlung mit z.B. flüssigem Stickstoff gemahlen. Dabei werden Polyurethan-Pulver mit einer für das bevorzugt angewandte Pastendruckverfahren günstigen Korngrößenverteilung im Teilchengrößenbereich von 1 bis 80 um erhalten.

Nach einem weiteren Verfahren werden Polyurethan-Pulver mit Teilchengrößen von ebenfalls 1 - 80 um, aber wesentlich engerer Korngrößenverteilung aus wäßrigen, sedimentierenden Polyurethan-Dispersionen isoliert. Hierzu werden spezielle Polyurethane hergestellt, die entweder gemäß DE 12 82 962 und DE 23 42 149 emulgierend wirkende ionische Gruppen enthalten oder gemäß DE 29 06 113 und DE 29 06 159 unter Zuhilfenahme von externen, nichtionischen Emulgatoren unter Anwendung hoher Scherkräfte in wäßrige, sedimentierende Polyurethan-Dispersionen überführt werden. Aus diesen Dispersionen werden nach längerem Stehen durch Filtrieren oder Zentrifugieren die Polyurethan-Pulver abgetrennt und ggf. getrocknet. Damit werden zwar die aufwendigen Mahlprozesse vermieden, dafür müssen jedoch nicht minder aufwendige Filtrations- bzw. Zentrifugierprozesse durchgeführt werden.

Zur Verwendung als Heißsiegelkleber können die Polyurethan-Pulver entweder direkt durch Aufstreuen oder nach Zugabe von Emulgatoren und gffs. weiteren Hilfsmitteln in wäßrige, druckfähige Pasten überführt und durch anschließendes Aufrakeln dieser Pasten auf die textile Oberfläche aufgebracht werden. Die letztgenannte Anwendung ist dann als besonders nachteilig anzusehen, wenn die Polyurethan-Pulver zuvor aus beispielsweise gemäß DE 29 06 113 und DE 29 06 159 hergestellten wäßrigen, sedimentierenden Dispersionen erhalten wurden.

Das mit dem Kleber beschichtete Gewebe wird dann durch dem Fachmann allgemein bekanntes, kurzzeitiges, heißes Verbügeln bei Temperaturen bis etwa 160°C unter mechanischem Druck mit einem weiteren Gewebeteil verbunden. Um unter diesen Bedingungen Verklebungen mit guten Haftfestigkeiten zu erzielen, müssen die verwendeten Heißsiegelkleber so eingestellt sein, daß sie bei den angewandten Siegeltemperaturen schmelzen oder zumindest erweichen. Die erzielbare Haftfestigkeit hängt dabei nicht unwesentlich von der Viskosität des Heißsiegelklebers unter den Siegelbedingungen ab. Da es sich bei den Polyurethanen in der Regel um relativ hochschmelzende Verbindungen handelt, müssen den Heißsiegelklebern auf Polyurethanbasis nicht selten Hilfsstoffe zugesetzt werden, die den Erweichungs- bzw. Klebepunkt auf einen für die Heißversiegelung günstigen Wert herabsetzen. In manchen Fällen ergeben die Verklebungen einen harten Griff, so daß Weichmacher verwendet werden müssen. Die Mitverwendung von Emulgatoren, Weichmachern und anderen Hilfsstoffen übt in der Regel jedoch einen negativen Einfluß sowohl auf die Haftfestigkeit und Dauerhaftigkeit als auch auf die Wasch- und Reinigungsbeständigkeit der Verklebungen aus.

Im Vergleich zu den anderen thermoplastischen Kunststoffen hat der Einsatz von Polyurethan-Pulvern als Heißsiegelkleber in Teilbereichen zweifellos zu Verbesserungen der Heißsiegelverklebungen geführt. Eine breite, universelle Anwendung ist jedoch auch mit diesen Produkten bisher nicht gelungen. Dieses und die zuvor beschriebenen aufwendigen Herstellungsprozesse der Polyurethan-Pulver lassen einen Bedarf nach weiter verbesserten Polyurethan-Heißsiegelklebern erkennen.

Wäßrige Polyurethan-Dispersionen sind ebenfalls bereits bekannt ("Angewandte Chemie", 82 (1970), S. 53-63 und "Progress in Organic Coating" 9 (1981), S. 281-340). Während diese Dispersionen als Beschichtungsmittel und als Kaschierkleber angewendet worden sind, sind bisher jedoch keine entsprechenden Dispersionen mit einem für die Heißversiegelung geeigneten Eigenschaftsprofil bekannt geworden. Ein besonderer Nachteil der Polyurethan-Dispersionen ist, daß sie wie alle thermoplastischen Kunststoffe bei der Heißversiegelung ihre Thermoplastizität nicht verlieren und somit die Gefahr besteht, daß sich die Verklebungen bei späterer thermischer Belastung, wie z.B. Bügeln, Dämpfen, Tumblern, insbesondere Formbügeln, wieder lösen.

In der EP-A 1 2924370 wird eine wäßrige Dispersion eines PU-Prepolymeren beschrieben, bei dem das Prepolymer nach Mischung mit einem Epoxiharz mit einem Polyamin kettenverlängert wird. In der EP-A 219677 wird die Kettenverlängerung von wässrigen Dispersionen von NCO-Prepolymeren beschrieben, wobei der Aminwasserstoff des polyfunktionellen Amins auch im stöchiometrischen Überschuß über die endständigen Isocyanatgruppen vorliegen kann. Derartige Dispersionen können auch mit Epoxiharzen abgemischt werden. In der DE-B 1 282 962 wird ein Verfahren zur Herstellung von wässrigen sedimentierenden dispergierbaren PU-Dispersionen beschrieben, bei denen die Kettenverlängerung eines NCO-Prepolymers mit Polyaminen/Hydrazinen vorgenommen wird, wobei auch auf die Eignung dieser Dispersionen für die Heißsiegelverklebung hingewiesen wird.

Aufgabe der Erfindung ist es, stabile wäßrige Polyurethan- bzw. Polyurethan-Harnstoff-Dispersionen bereitzustellen, die sowohl als Kleber auf wäßriger Basis in ihrer Qualität bei der Beflockung von Elastomermaterialien den bisher verwendeten lösemittelhaltigen Klebstoffen, insbesondere hinsichtlich Haftung des Klebers am Substrat und Abriebfestigkeit des Flocks (Echtheit) nicht nachstehen und die ferner, ggfs. nach Verdicken unmittelbar auf textile Flächengebilde, vorzugsweise nach dem Pastendruck-Verfahren aufgebracht werden können und die heißsiegelbar sind, d.h. die nach dem Heißsiegeln dauerhafte, temperaturstabile Verklebungen mit guten Haftfestigkeiten und guten Wasch- und Reinigungsbeständigkeiten liefern.

Diese Aufgabe wird erfindungsgemäß durch die neuen wäßrigen Polyurethan- bzw. PolyurethanharstoffDispersionen gemäß Anspruch 1 gelöst.

Gegenstand der Erfindung sind somit wäßrige Polyurethan- bzw. Polyurethanharnstoff-Dispersionen, erhältlich durch Umsetzung einer Mischung aus
- wenigstens einem höhermolekularen Polyol
- mit einer molaren Masse von 500 - 6000 g/Mol ggfs. zusätzlich niedermolekularen Verbindungen mit einer molaren Masse von 62 - 600 g/Mol jeweils mindestens zwei gegenüber NCO-reaktiven Gruppen und
- wenigstens einer Verbindung mit mindestens zwei gegenüber NCO-reaktiven Gruppen und mindestens einer zur lonenbildung befähigten Gruppe
mit wenigstens einem aromatischen, aliphatischen und/oder cycloaliphatischen Polyisocyanat zu einem endständig NCO-Gruppen aufweisenden Prepolymer, Neutralisation der ionenbildenden Gruppen des Prepolymeren, Kettenverlängerung und Umsetzung mit einem mindestens eine gegenüber NCO-reaktive Gruppe und mindestens eine gegenüber reaktiven Melaminharz-Vorkondensate bzw. reaktiven Epoxidharze reaktive Gruppe enthaltenden echtheitsverbessernden Modifizierungsmittel, sowie Dispergierung in Wasser, wobei die Neutralisation der ionenbildenden Gruppen vor oder während, die Kettenverlängerung und die Umsetzung mit dem echtheitsverbessernden Modifizierungsmittel vor oder nach der Dispergierung des Prepolymeren in Wasser erfolgen kann und Kettenverlängerungsmittel und Modifizierungsmitel in einer solchen Menge eingesetzt werden, daß die Zahl der gegenüber NCO-reaktiven Gruppen plus der gegenüber Melaminharz-Vorkondensaten bzw. Epoxidharzen reaktiven Gruppen die Zahl der endständigen NCO-Gruppen des Prepolymeren übersteigt, wobei als Kettenverlängerungsmittel mindestens zwei gegenüber NCO-reaktive Gruppen enthaltende niedermolekulare Di- und/oder Polyole, aliphatische oder aromatische Di- und/oder Polyamine, Di- und/oder Polyhydrazide, Aminohydrazide und/oder Amidine, insbesondere niedermolekulare Diamine wie Ethylendiamin und als echtheitsverbesserndes Modifizierungsmittel Aminoalkohole verwendet werden

Es hat sich überraschenderweise gezeigt, daß wäßrige Polyurethan- bzw. Polyurethanharnstoff-Dispersionen, deren Polyolkomponente aus einem höhermolekularen Polycaprolactonpolyol allein oder einem Gemisch aus einem höhermolekularen Polycaprolactonpolyol und einem höhermolekularen Polyesterpolyol besteht und deren Polymergerüst freie, gegenüber reaktiven Melaminharz-Vorkondensaten bzw. reaktiven Epoxidharzen reaktive Gruppen aufweist, und die eine geringe Menge eines wasserlöslichen Melaminharz-Vorkondensats bzw. eines wasserlöslichen reaktiven Epoxidharzes enthalten, sich durch eine, mit anderen handelsüblichen Polyurethandispersionen bisher nicht erreichte hervorragende Haftung auf Gummimaterialien und darüber hinaus durch sehr gute Echtheiten, wie z.B. hohe Trocken- und Naßabriebfestigkeit sowie Beständigkeit gegenüber Wasser und organischen Lösungsmitteln sowie durch eine bisher nicht erreichte hervorragende Heißsiegelverklebung textiler Flächengebilde und darüberhinaus durch sehr guter Echtheiten, wie z.B. gute Wasch- und Reinigungsbeständigkeit sowie sehr gute Beständigkeit gegenüber thermischer Belastung der Verklebung auszeichnen.

Die Herstellung der erfindungsgemäß verwendeten Dispersionen erfolgt nach allgemein bekannten und wie bspw. in G. Oertel, "Polyurethane Handbook", Carl Hanser Verlag (1985) bzw. in D. Dieterich, "Die Angewandte Makromolekulare Chemie", 98, 135-165 (1981) beschriebenen Verfahren unter Verwendung der bereits erwähnten und der an sich bekannten Ausgangsmaterialien des Isocyanat-Polyadditionsverfahrens.

Zu den allgemein bekannten Ausgangsmaterialien gehören im wesentlichen höhermolekulare diund/oder höherfunktionelle Verbindungen mit gegenüber NCO-reaktiven Wasserstoffatomen, wie z.B. Polyhydroxyverbindungen mit molarer Masse von 500-10000 g/mol, vorzugsweise 500-6000 g/mol. Bei den erfindungsgemäß verwendeten Dispersionen wurde die gute Haftung dadurch erzielt, daß als Polyhydroxyverbindung ein Gemisch bestehend aus einem Polyesterpolyol mit einer molaren Masse von 500-6000 g/mol, vorzugsweise 1000-4000 g/mol und einem Polycaprolactonpolyol mit einer molaren Masse von 500-6000 g/mol, vorzugsweise 1000-3000 g/mol eingesetzt wird. Beispielhaft seien genannt: Polyesterpolyole aus Dicarbonsäuren oder Dicarbonsäureanhydriden wie Adipinsäure, Phthalsäure, Isophthalsäure, Phthalsäureanhydrid, Tetrahydrophthalsäureanhydrid, dimere und trimere Fettsäuren und Diolen, wie Ethylenglykol, Diethylenglykol, Propylenglykol, 1,4-Butandiol, 1,6-Hexandiol, Neopentylglykol oder beliebigen Diolgemischen. Anstelle eines Gemisches aus Polyesterpolyol und Polycaprolactonpolyol kann auch Polycaprolactonpolyol allein eingesetzt werden.

Werden Gemische aus höhermolekularem Polyesterpolyol und höhermolekularem Polycaprolactonpolyol eingesetzt, so haben diese bevorzugt eine zusammensetzung im Verhältnis von 75 : 25 Gew.-%, insbesondere 10:90 Gew.-% Polyesterpolyol:Polycaprolactonpolyol.

Als Polycaprolactonpolyole seien beispielhaft die Handelsprodukte der Fa. Union Carbide mit dem Handelsnamen TONE™ mit molaren Massen von 1250-3000 g/mol (≙ OHZ von ∼ 90 bis ∼ 37) genannt; andere bekannte Produkte sind die Capa-Polycaprolactonpolyole der Fa. Interox-Chemicals.

Neben den höhermolekularen Verbindungen können auch niedermolekulare Verbindungen mit mindestens zwei, vorzugsweise drei gegenüber NCO-reaktiven H-Atomen mit molaren Massen von 62 bis etwa 600 g/mol (z.B. als Vernetzer) zum Polyurethanaufbau mitverwendet werden, z.B. Di- und/oder Polyole, aliphatische oder aromatische Di- und/oder Polyamine, Aminoalkohole oder Thiolverbindungen. Beispielsweise seien genannt: Ethylenglykol, Diethylenglykol, 1,4-Butandiol, 1,6-Hexandiol, Neopentylglykol, 1,4-Dihydroxycyclohexan, Trimethylolpropan, Glycerin, Hexantriol, Ethylendiamin, Ethanolamin und Thioglykol. Die Menge an derartigen niedermolekularen Verbindungen beträgt 0 bis 10, vorzugsweise 0,5 bis 5 Gew.-%, bezogen auf die Menge der höhermolekularen Verbindungen mit mindestens zwei gegenüber NCO-reaktiven H-Atomen.

Für den Einbau der ionischen Gruppen in das Polyurethan-Polymer kommen Verbindungen in Betracht, die über mindestens zwei gegenüber NCO reaktive Gruppen und über mindestens eine zur Anionen- oder Kationenbildung befähigte Gruppe verfügen. Geeignete, mit NCO-reagierende Gruppen sind insbesondere Hydroxyl- sowie primäre und sekundäre Aminogruppen. Allgemein werden als zur Anionbildung befähigte Gruppen Carboxyl- und Sulfonsäuregruppen eingesetzt. Zur Kationenbildung eignen sich insbesondere tertiäre Aminogruppen. Als Verbindungen, die mindestens zwei gegenüber NCO reaktive Gruppen und mindestens eine zur Anionenbildung befähigte Gruppen besitzen, sind Dihydroxycarbonsäuren, z.B. Dihydroxypropionsäure, Dimethylolpropionsäure, Dihydroxybernsteinsäure oder Dihydroxybenzoesäure zu nennen. Bevorzugte einbaufähige, kationbildende Verbindungen sind Dihydroxyamine, z.B. Bis(2-hydroxyethyl)benzylamin, Bis(2-hydroxypropyl)anilin, N-Butyldiethanolamin, N-Methyldiethanolamin, N-Methyl-bis-(3-aminopropyl)-amin und dergleichen.

Zur Neutralisation der anionbildenden Gruppen werden allgemein anorganische oder organische Basen wie z.B. tertiäre Amine und/oder Alkali- und Erdalkalihydroxide eingesetzt. Beispiele sind Triethylamin, Tributylamin, N-Ethylmorpholin, Ammoniak, Natriumhydroxid und Kaliumhydroxid.

Die kationbildenden Gruppen werden entweder mit anorganischen oder organischen Säuren wie z.B. Salzsäure, Phosphorsäure, Essigsäure, Fumarsäure, Maleinsäure, Milchsäure, Weinsäure und Oxalsäure neutralisiert oder durch Umsetzung mit einem Quaternierungsmittel wie z.B. Methylchlorid, Methyljodid, Dimethylsulfat, Chloracetamid, Chloressigsäurethylester und Benzylchlorid in löslichkeitsvermittelnde Gruppen überführt.

Neben den ionischen Gruppen können in den erfindungsgemäßen Lösungen und Dispersionen auch innerhalb von end- und/oder seitenständig angeordneten als auch innenständig eingebauten Polyetherketten vorliegende Ethylenoxid- und/oder Propylenoxideinheiten als hydrophile, löslichkeitsvermittelnde Struktureinheiten vorliegen.

Die Menge der ionenbildenden Komponenten wird allgemein so gewählt, daß die erfindungsgemäßen Dispersionen 2 bis 100, vorzugsweise 5-50 Milliäquivalente an ionisierten Gruppen pro 100 g Festsubstanz aufweisen.

Als Polyioscyanate können aliphatische, cycloaliphatische, araliphatische, aromatische oder hetereocyclische Di- und/oder technische Polyisocyanate, vorzugsweise mit molaren Massen bis 300 g/mol eingesetzt werden. Bevorzugt sind die Diisocyanate wie die isomeren Toluylendiisocyanate, das Isophorondiisocyanat, das 2,2,4- und/oder 2,4,4-Trimethyl-1,6-hexamethylendiisocyanat, das 4,4'-und/oder 2,4'-Diphenylmethandiisocyanat oder das Hexan-1,6-diisocyanat.

Als Kettenverlängerungsmittel eignen sich niedermolekulare Verbindungen mit mindestens zwei gegenüber NCO-reaktiven H-Atomen und mit molaren Massen von 62 bis etwa 400 g/mol, wie Di- und/oder Polyole, aliphatische oder aromatische Di- und/oder Polyamine, Di- und/oder Polyhydrazide, Aminohydrazide und Amidine, insbesondere niedermolekulare Amine wie Ethylendiamin.

Beispiele sind Hydrazin(hydrat), Ethylenglykol, Diethylenglykol, 1,4-Butandiol, 1,6-Hexandiol, Glycerin, Trimethylolpropan, Propylendiamin, Isophorondiamin und andere Kettenverlängerungsmittel.

Zur Echtheitsverbesserung der Produkte werden reaktive Gruppen in das Polymermolekül eingebaut, die beim Trocknen des Flockklebers mit zugesetzten reaktiven Melaminharz-Vorkondensaten bzw. reaktiven Epoxidharzen unter Vernetzung reagieren. Hingegen ist die Trockentemperatur bei Verwendung als Heißsiegelkleber so zu wählen, daß beim späteren, gegebenenfalls getrennt ausgeführten Heißsiegeln erst die Vernetzung/Kondensation eintritt. Für die Einführung solcher Gruppen kommen Aminoalkohole in Betracht.

Die guten Echtheiten der Verklebungen bei Verwendung als Flockkleber und zur Heißsiegelung, die durch den Einsatz der erfindungsgemäßen Polyurethan- bzw. Polyurethanharnstoff-Dispersionen resultieren, werden durch einen bei der Heißversiegelung ablaufenden Vernetzungsprozeß erreicht. Hierbei geht die Thermoplastizität des Klebers weitestgehend verloren.

Als Vernetzungskomponente dient ein reaktives Melaminharz-Vorkondensat bzw. ein reaktives Epoxidharz. Die Vernetzung von Polyurethan-Dispersionen mit Melaminharzen ist an sich bekannt und beispielsweise in DE 35 16 806, US 3,835,081 und NL 7302704 beschrieben. Danach wird den ausreagierten Polyurethan-Dispersionen eine geringe Menge eines Melaminharzes zugesetzt und bei Temperaturen von 140°C der Film vernetzt.

Nach O.Lorenz, 12. Kolloquium für Chemie und Technologie makro-molekularer Stoffe an der FH Aachen, 8.Mai 1987 (53. Veröffentlichung der Fachhochschule Aachen. S. 115-121) erfolgt die Vernetzung durch Verknüpfung über eine Reaktion von im Polymergerüst enthaltenen, löslichkeitsvermittelnden Carboxylgruppen mit Hexamethoxymethylmelamin unter Methanolabspaltung und Esterbildung.

Eine solche Vernetzung allein genügt jedoch nicht, um die erfindungsgemäßen Echtheiten zu erzielen. Überraschenderweise wurde gefunden, daß die erfindungsgemäß guten Echtheiten der Verklebungen nur dann erreicht werden, wenn zusätzlich zu den Carboxylgruppen noch weitere freie gegenüber Melaminharz-Vorkondensaten bzw. Epoxidharzen reaktive Gruppen, insbesondere Hydroxylgruppen im Polymergerüst vorhanden sind. Die Einführung dieser reaktiver Gruppen erfolgt im Kettenverlängerungsschritt durch Zugabe von Aminoalkoholen.

Weiterhin können die in der Polyurethanchemie üblichen Hilfsstoffe zur Herstellung der Polyurethane verwendet werden. Dazu gehören z.B. Katalysatoren wie tertiäre Amine (z.B. Triethylamin, Tributylamin, N-Methylmorpholin) oder Metallverbindungen (z.B. Eisenacetylacetonat, Zinndioctoat, Dibutylzinndilaurat), Oxidations- und Lichtstabilisatoren, Pigmente und Füllstoffe.

Die Herstellung der erfindungsgemäß verwendeten Dispersionen wurde vorzugsweise so vorgenommen, daß zunächst aus den Ausgangskomponenten wie z.B.
- einem Polyester- und einem Polycaprolactonpolyol
- ggfs. einem niedermolekularen Di- oder Polyol
- einer ionenbildenden Gruppe enthaltenden und gegenüber NCO mindestens difunktionell reaktiven Verbindung
- und
- einem Di- oder Polyisocyanat
in der Schmelze ein endständig Isocyanatgruppen aufweisendes Prepolymer hergestellt wird, indem die genannten Ausgangsmaterialien unter Einhaltung eines NCO/OH-Äquivalentverhältnisses von 1,2:1 bis 2,5:1, vorzugsweise von 1,2:1 bis 1,8:1 umgesetzt werden. Die Reaktionstemperatur liegt bei dieser Umsetzung im allgemeinen bei 30 bis 150°C, vorzugsweise 50-110°C.

Das Verfahren wird vorzugsweise lösungsmittelfrei durchgeführt. In Fällen hoher Prepolymerviskosität ist die Verwendung organischer NCO-inerter Lösungsmittel wie Aceton, Methyl-Ethyl-Keton, N-Methylpyrrolidon und dergleichen möglich.

Zur Neutralisation anionenbildender Gruppen wird die erforderliche Menge Base, z.B. in Form eines tertiären Amins zum Prepolymeren gegeben und das Prepolymere anschließend in das Dispergierwasser eingerührt. Die Neutralisation kann auch derart vorgenommen werden, daß die zur Neutralisation erforderliche Base in Form eines tertiären Amins und/oder einer Alkali- bzw. Erdalkalihydroxyverbindung in dem Dispergierwasser vorgelegt wird und das Prepolymere in diese basische Lösung eingerüht wird. Die Temperatur des Dispergierwassers beträgt im allgemeinen 10-60°C, vorzugsweise 15-40°C. Die Neutralisation kationbildender Gruppen kann derart erfolgen, daß in das Prepolymere eingebaute tert. Stickstoffatome entweder vor der Dispergierung mit einem Quaternierungsmittel umgesetzt oder durch Einrühren des Prepolymeren in säurehaltiges Dispergierwasser neutralisiert werden. Zur Umsetzung der endständigen NCO-Gruppen des Prepolymeren mit dem Kettenverlängerungsmittel und dem echtheitsverbessernden Modifizierungsmittel werden diese entweder in reiner Form oder in verdünnter, vorzugsweise wäßriger Lösung zugeführt. Kettenverlängungs- und echtsheitsverbesserndes Modifizierungsmittel können sowohl als Gemisch als auch getrennt voneinander zugegeben werden. Die Zugabe kann vor oder vorzugsweise nach der Dispergierung erfolgen. Bei dieser Umsetzung beträgt die Reaktionstemperatur 10-80°C, vorzugsweise 15-50°C. Da die gegenüber Melaminharz-Vorkondensaten bzw. Epoxidharz-reaktiven Gruppen in der Regel ebenfalls mit NCO-Gruppen reagieren, wird das Kettenverlängerungsmittel und das echtheitsverbessernde Modifizierungsmittel in einer solchen Menge eingesetzt, daß die Zahl der gegenüber NCO-reaktiven Gruppen plus der gegenüber Melaminharz-Vorkondensaten bzw. Epoxidharzen reaktiven Gruppen die Zahl der endständigen NCO-Gruppen des Prepolymeren übersteigt, und zwar so, daß ein Äquivalentverhältnis von NCO-Gruppen zu gegenüber NCO-reaktiven Gruppen plus gegenüber Melaminharz-Vorkondensat-bzw. Epoxidharz reaktiven Gruppen von 0,6:1 bis 0,99:1, vorzugsweise von 0,75:1 bis 0,95:1 eingehalten wird. Wird bspw. ein Diamin als Kettenverlängerungsmittel und ein Aminoalkohol als echtheitsverbesserndes Modifizierungsmittel eingesetzt, so werden die einzusetzenden Mengen dieser Komponenten vorzugsweise so gewählt, daß die Aminogruppen mit den endständigen NCO-Gruppen des Prepolymeren unter Kettenverlängerung und Kettenabschluß reagieren, und die Hydroxylgruppen aus dem Aminoalkohol als endständige Gruppen für die Vernetzungsreaktion mit reaktivem Melaminharz-Vorkondensat bzw. reaktivem Epoxidharz zur Verfügung stehen.

Den so hergestellten Polyurethan- bzw. Polyurethanharnstoff-Dispersionen wird entweder direkt nach der Herstellung oder aber direkt vor der Verwendung ein wasserlösliches Melaminharz-Vorkondensat oder ein reaktives, wasserlösliches Epoxidharz in einer Menge von 0,5-10 Gew.-%, vorzugsweise von 1-5 Gew.-% als thermisch aktivierbarer Vernetzer zugegeben.

Reaktive Melaminharz-Vorkondensate und Epoxidharze sind bekannt. Geeignet sind z.B. die Handelsprodukte Cassurit HML-flüssig (50%ige wäßrige Lösung) = Hexamethylolmelamin und Eurepox 756 D (67%ig) der Fa. Schering AG.

Zum Beflocken von elastomeren Formkörpern werden die vorstehend beschriebenen wässrigen Polyurethan- bzw. Polyurethanharnstoffdispersionen nach Zugabe des reaktiven Melaminharz-Vorkondensats oder des reaktiven Epoxidharzes gegebenenfalls nach vorheriger Verdickung auf das Substrat aufgebracht, durch Beflocken mit textilen Kurzfasern beladen und bei erhöhter Temperatur getrocknet, kondensiert und gegebenenfalls von überschüßigem Flock befreit.

Dabei wird die zur Beflockung eingesetzte Mischung aus Polyurethan- bzw. Polyurethanharnstoffdispersion und wasserlöslichem reaktiven Melaminharz-Vorkondensat oder wasserlöslichem reaktivem Epoxidharz mittels geeigneter Methoden, vorzugsweise mittels Pinsel, Bürste oder Sprühpistole, auf das zu beflockende Substrat aufgetragen.

Trocknung und Kondensieren wird vorteilhaft bei Temperaturen im Bereich von 70 bis 180 °C vorgenommen.

Dabei hat es sich als vorteilhaft erwiesen, die erfindungsgemäß als Flockkleber eingesetzten Dispersionen mit einer Trockenauflage von 30 bis 160 g/m², vorzugsweise von 50 bis 100 g/m² aufzubringen. Die eingesetzten Dispersionen haben einen Feststoffgehalt im Bereich von 30 bis 60, vorzugsweise 30 bis 45 Gew.-%.

Für das Heißversiegeln von textilen Flächengebilden wie Geweben, Maschenware oder Vliesstoffe werden die vorstehend beschriebenen wäßrigen Polyurethan- bzw. Polyurethanharnstoffdispersionen nach Zugabe von 0,5 bis 10 Gew-% des reaktiven Epoxidharzes, gegebenenfalls nach vorheriger Verdickung, auf eine Lage des textilen Flächengebildes aufgebracht, wobei das Pastenpunktverfahren bevorzugt wird. Darauf wird das beschichtete Textilmaterial bei erhöhten Temperaturen getrocknet und gegebenenfalls später ein zweites textiles Flächengebilde unter Druck und erhöhter Temperatur mit dem ersten Flächengebilde verklebt. Die Trocknungstemperaturen betragen hier etwa 80 bis 100 °C; der Heißsiegelkleber wird in einer Trockenauflage von 5 bis 25 g/m², bevorzugt 15 bis 25 g/m² aufgebracht.

Die Herstellung der erfindungsgemäß verwendeten Dispersionen wird in den nachfolgenden Beispielen näher beschrieben.

### BEISPIEL 1

Ansatz:

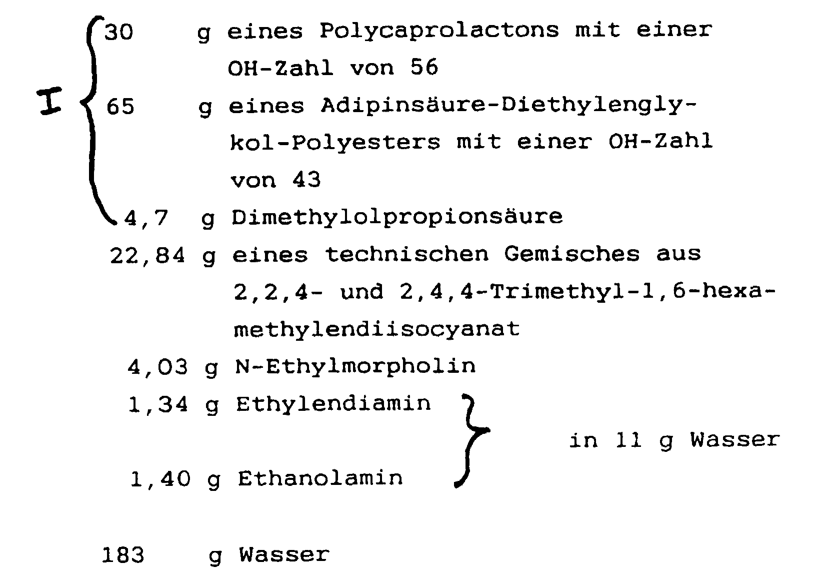

Durchführung: Das Gemisch 1 wird unter Rühren 60 Min. bei 120°C im Vakuum entwässert. Nach Abkühlen auf 80°C und Belüften mit Stickstoff wird das Diisocyanat zugegeben. Es wird solange unter N₂-Atmosphäre bei 90-95°C gerührt, bis ein konstanter NCO-Wert erreicht ist. Anschließend wird auf 80°C abgekühlt, das N-Ethylmorpholin zugetropft und noch 15 Min. bei 80°C gerührt. Danach wird die heiße Schmelze innerhalb von 5 Min. in das kalte, gut gerührte Dispergierwasser eingerührt. 30 Min. nach der Dispergierung wird durch tropfenweise Zugabe der Ethylendiamin-Ethanolamin-Lösung die Kettenverlängerung (Kettenabschluß) vorgenommen. Abschließend wird noch eine Stunde bei Raumtemperatur gerührt. Es entsteht eine feinteilige Dispersion mit einem Feststoffgehalt von 40% und einer Brookfield-Viskosität von 240 mPa.s.

### BEISPIEL 2

Ansatz:

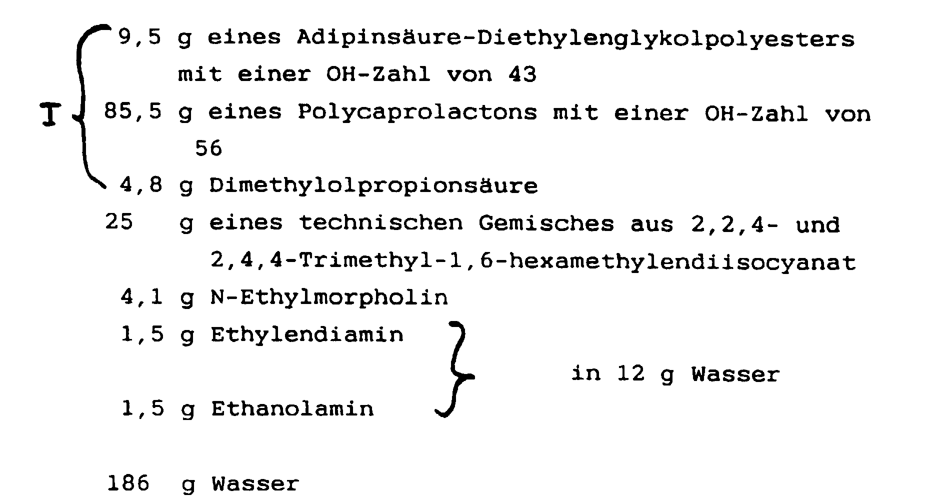

Durchführung: Das Gemisch 1 wird unter Rühren 60 Min. bei 120°C im Vakuum entwässert. Nach Abkühlen auf 80°C und Belüften mit Stickstoff wird das Diisocyanat zugegeben. Das Gemisch wird unter N2-Atmosphäre 2 Stunden bei 90-95°C gerührt. Danach wird die Dimethylolpropionsäure zugegeben und das Gemisch bei 90-95°C noch solange gerührt, bis ein konstanter NCO-Wert erreicht ist. Anschließend wird auf 80°C abgekühlt, das N-Ethylmorpholin zugetropft und noch 15 Min. bei 80°C gerührt. Danach wird die heiße Schmelze innerhalb von 5 Min. in das kalte, gut gerührte Dispergierwasser eingerührt. 30 Min. nach der Dispergierung wird durch tropfenweise Zugabe der Ethylendiamin-Ethanolamin-Lösung die Kettenverlängerung (Kettenabschluß) vorgenommen. Abschließend wird noch eine Stunde bei Raumtemperatur gerührt. Es entsteht eine feinteilige Dispersion mit einem Feststoffgehalt von 40% und einer Brookfield-Viskosität von 1025 mPa.s.

### BEISPIEL 3

Ansatz:

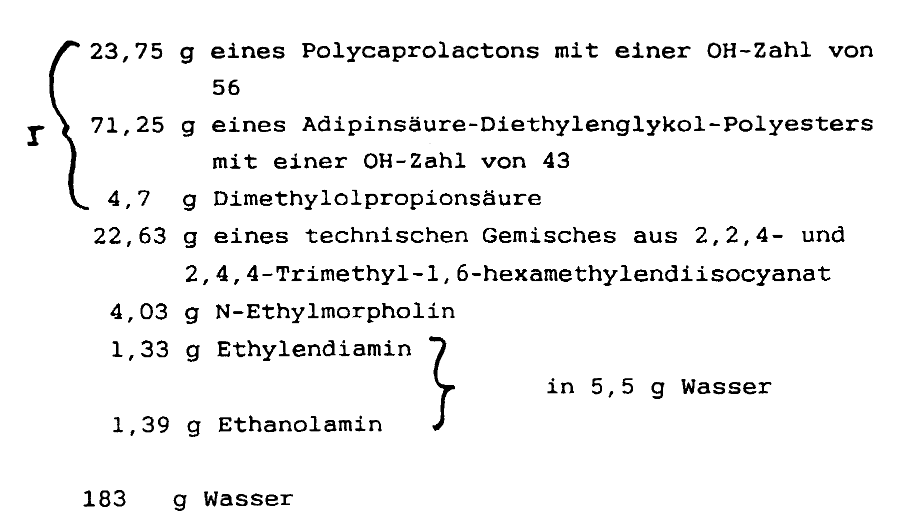

Durchführung: Das Gemisch 1 wird unter Rühren 60 Min. bei 120°C im Vakuum entwässert. Nach Abkühlen auf 80°C und Belüften mit Stickstoff wird das Diisocyanat zugegeben. Es wird solange unter N2-Atmosphäre bei 90-95°C gerührt, bis ein konstanter NCO-Wert erreicht ist. Anschließend wird auf 80°C abgekühlt, das N-Ethylmorpholin zugetropft und noch 15 Min. bei 80°C gerührt. Danach wird die heiße Schmelze innerhalb von 5 Min. in das kalte, gut gerührte Dispergierwasser eingerührt. 30 Min. nach der Dispergierung wird zunächst die Ethanolaminlösung und danach die Ethylendiaminlösung tropfenweise zugefügt. Abschließend wird noch eine Stunde bei Raumtemperatur gerührt. Es entsteht eine feinteilige Dispersion mit einem Feststoffgehalt von 40% und einer Brookfield-Viskosität von 175 mPa.s.

### BEISPIEL 4

Ansatz:

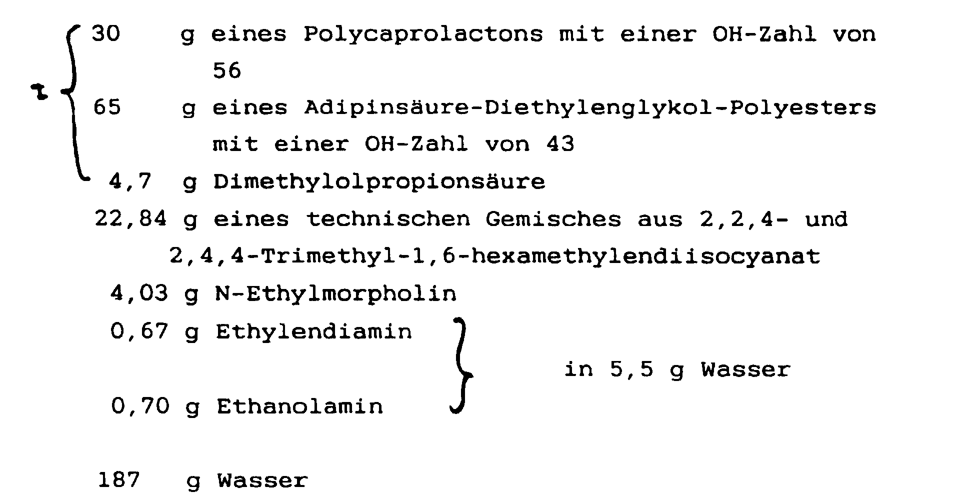

Durchführung: analog Beispiel 1
Es entsteht eine feinteilige Dispersion mit einem Feststoffgehalt an 40% und einer Brookfield-Viskosität von 40 mPa.s.

### BEISPIEL 5

Ansatz:

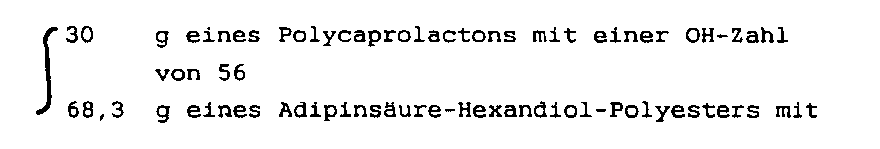

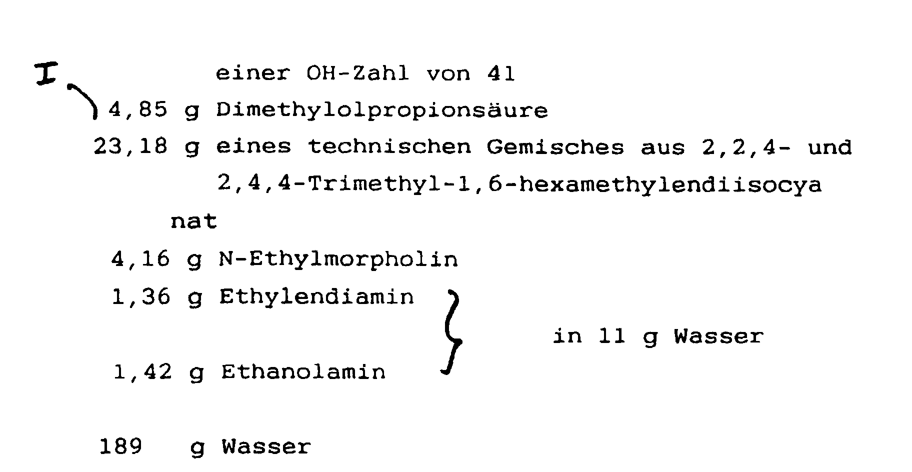

Durchführung: analog Beispiel 1
Es entsteht eine feinteilige Dispersion mit einem Feststoffgehalt von 40% und einer Brookfield-Viskosität von 1370 mPa.s.

### BEISPIEL 6

Ansatz:

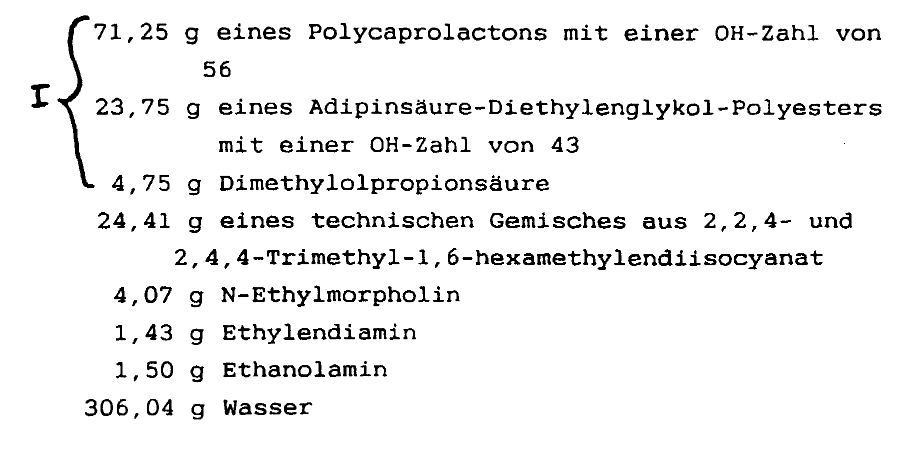

Durchführung: analog Beispiel 1
Es entsteht eine feinteilige Dispersion mit einem Feststoffgehalt von 30% und einer
Brookfield-Viskosität von 22 mPa.s.

### BEISPIEL 7

Ansatz:

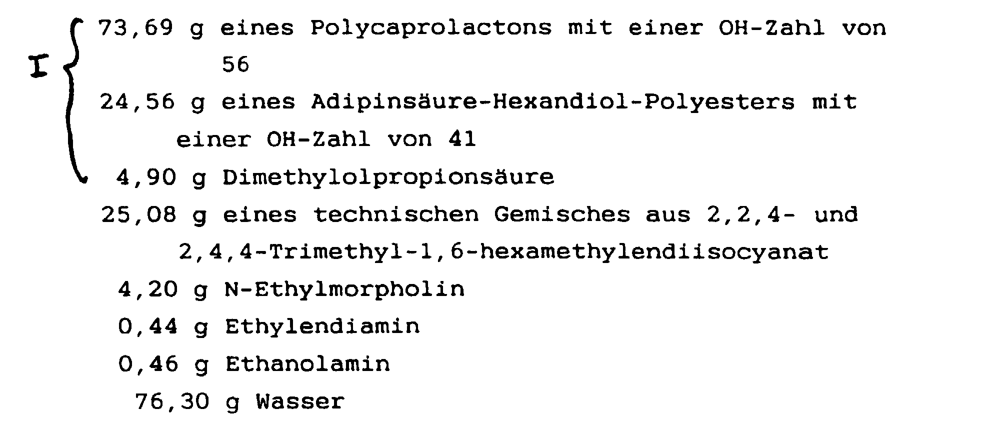

Durchführung: analog Beispiel 1
Es entsteht eine feinteilige Dispersion mit einem Feststoffgehalt von 60% und einer Brookfield-Viskosität von 3240 mPa.s.

### BEISPIEL 8

- Ansatz:: 92,82 g eines Polycaprolactons mit einer OH-Zahl von 56
4,80 g Dimethylolpropionsäure
25,02 g eines technischen Gemisches aus 2,2,4- und 2,4,4-Trimethyl-1,6-hexamethylendiisocyanat
4,12 g N-Ethylmorpholin
1,47 g Ethylendiamin
1,54 g Ethanolamin
188,00 g Wasser
- Durchführung:: Das Gemisch aus Polycaprolacton und Dimethylolpropionsäure wird unter Rühren 60 Minuten bei 120°C im Vakuum entwässert. Nach Abkühlen auf ca. 90°C und Belüften mit Stickstoff wird das Diisocyanat zugegeben. Es wird solange unter N₂-Atmosphäre bei 90-95°C gerührt, bis ein konstanter NCO-Wert erreicht ist. Anschließend wird das N-Ethylmorpholin zugegeben und die heiße Schmelze in das kalte, gut gerührte Dispergierwasser eingerührt. 30 Minuten nach der Dispergierung wird durch tropfenweise Zugabe der Ethylendiamin-Ethanolamin-Lösung die Kettenverlängerung (Kettenabschluß) vorgenommen. Abschließend wird noch eine Stunde bei Raumtemperatur gerührt. Es entsteht eine feinteilige Dispersion mit einem Feststoffgehalt von 40% und einer Brookfield-Viskosität von 180 mPa.s.

### BEISPIEL 9:

### Herstellungsverfahren

Ansatz:

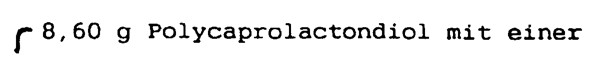

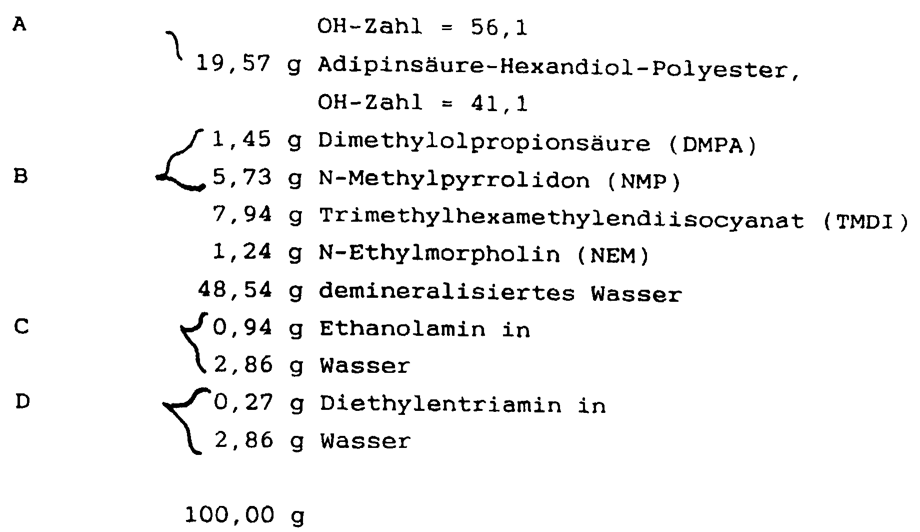

Durchführung: Die Komponente A wird 1 Stunde bei 90-95°C unter Rühren im Vakuum entwässert. Nachdem sich ein klares Polyestergemisch gebildet hat, wird die Apparatur mit Stickstoff belüftet und bei 90°C innerhalb weniger Minuten das Diisocyanat zugegeben.
Nach einer Reaktionszeit von 2 Stunden bei 90-95°C wird die Komponente B zugesetzt und anschließend 1 Stunde bei 90-95°C gerührt.
Danach erfolgt die Neutralisation des Prepolymeren durch Zugabe des NEM und einer
Nachrührzeit von 20 Minuten.
Das so hergestellte Prepolymere wird innerhalb von 5-10 Minuten in das Dispergierwasser eingetragen und 1 Stunde nachgerührt.
Die Kettenverlängerung bzw. der Kettenabschluß werden durch aufeinanderfolgende Zugabe der beiden Komponenten C und D bei einer Nachrührzeit von 1 Stunde bewirkt.
Es entsteht eine 40 %ige dünnflüssige Dispersion mit einer Viskosität von 60 mPa.s.
Der pH-Wert der Dispersion beträgt 7,45.

### BEISPIEL: 10

Ansatz:

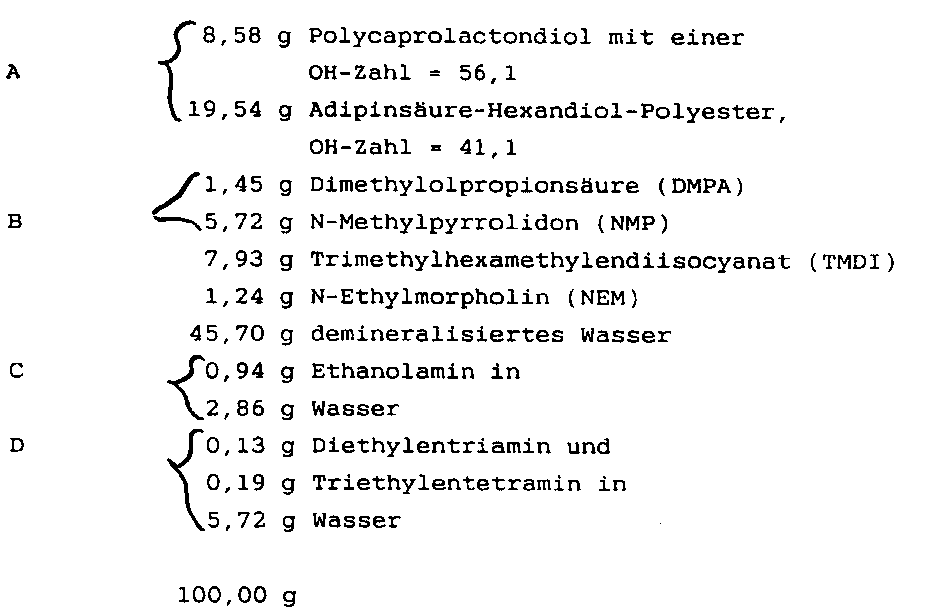

Durchführung: Die Komponente A wird 1 Stunde bei 90-95°C unter Rühren im Vakuum entwässert. Nach Erhalt eines klares Polyestergemisches, wird die Apparatur mit Stickstoff belüftet und bei 90°C innerhalb weniger Minuten das Diisocyanat zugegeben.
Nach einer Reaktionszeit von 2 Stunden bei 90-95°C wird die Komponente B zugesetzt und 1 Stunde bei 90-95°C gerührt.
Die Neutralisation des Prepolymeren erfolgt durch die Zugabe des NEM bei einer Nachrührzeit von 20 Minuten.
Das so hergestellte Prepolymere wird innerhalb von 5-10 Minuten in das Dispergierwasser eingetragen und 1 Stunde nachgerührt.
Die Kettenverlängerung bzw. der Kettenabschluß werden durch aufeinanderfolgende Zugabe der beiden Komponenten C und D bei einer Nachrührzeit von 1 Stunde bewirkt.
Es entsteht eine feinteilige Dispersion mit einem Feststoffgehalt von 40 % und einer Brookfield-Viskosität von 50 mPa.s. Der pH-Wert der Dispersion beträgt 7,60.

### BEISPIEL 11: (mit Isophorondiisocyanat)

Ansatz:

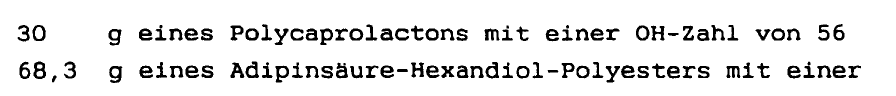

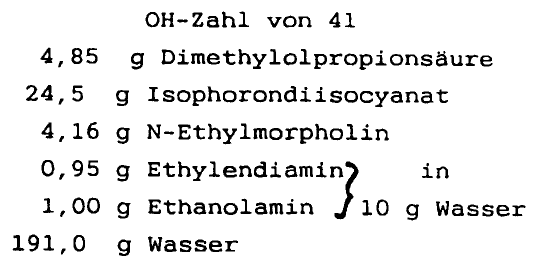

Durchführung: analog Beispiel 1
Es entsteht eine feinteilige Dispersion mit einem Feststoffgehalt von 40 % und einer
Brookfield-Viskosität von 930 mPa.s.

### BEISPIEL 12: (mit Desmodur W (= aliphatisches Diisocyanat)

Ansatz:

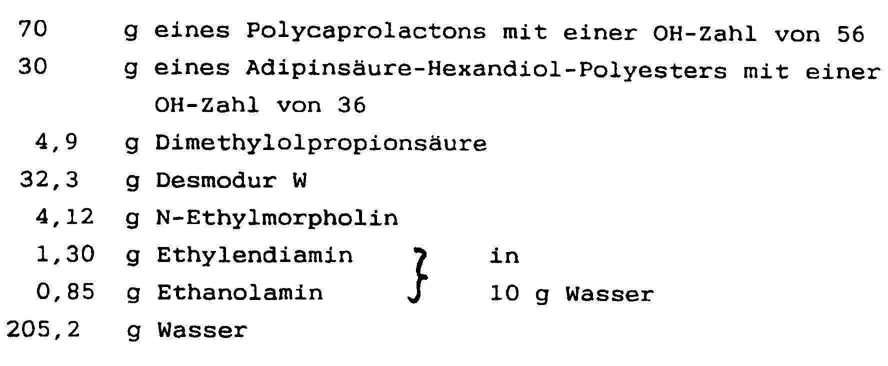

Durchführung: analog Beispiel 1
Es entsteht eine feinteilige Dispersion mit einem Feststoffgehalt von 40 % und einer Brookfield-Viskosität von 1170 mPa.s.

### BEISPIEL 13

Ansatz:

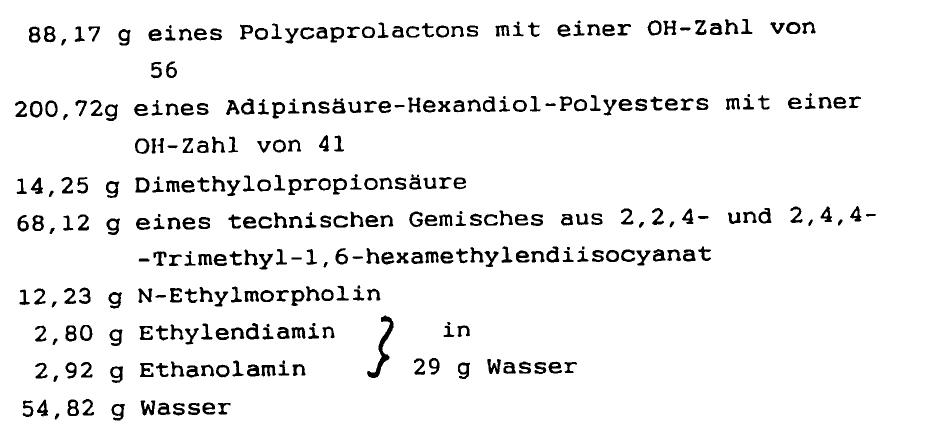

Durchführung: Das Gemisch aus Polycaprolacton, Polyester und Dimethylolpropionsäure wird unter Rühren 60 Minuten bei 120°C im Vakuum entwässert. Nach Abkühlen auf ca. 90°C und Belüften mit Stickstoff wird das Diisocyanat zugegeben. Es wird solange unter N₂-Atmosphäre bei 90-95°C gerührt, bis ein konstanter NCO-Wert erreicht ist. Anschließend wird das N-Ethylmorpholin zugegeben und die heiße Schmelze in das kalte, gut gerührte Dispergierwasser eingerührt. 30 Minuten nach der Dispergierung wird durch tropfenweise Zugabe der Ethylendiamin-Ethanolamin-Lösung die Kettenverlängerung (Kettenabschluß) vorgenommen. Abschließend wird noch eine Stunde bei Raumtemperatur gerührt. Es entsteht eine feinteilige Dispersion mit einem Feststoffgehalt von 40% und einer Brookfield-Viskosität von 720 mPa.s.

### BEISPIEL 14

Ansatz:

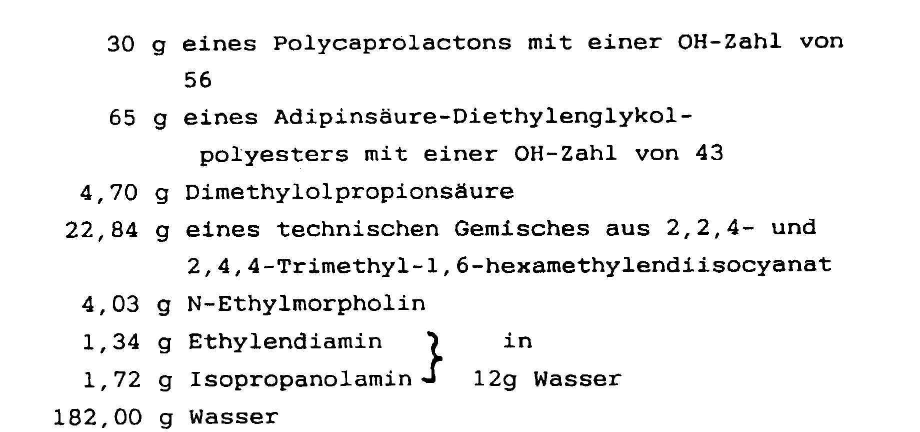

Durchführung: Analog Beispiel 13
Es entsteht eine feinteilige Dispersion mit einem Feststoffgehalt von 40% und einer Brookfield-Viskosität von 960 mPa.s.

### BEISPIEL 15

Ansatz:

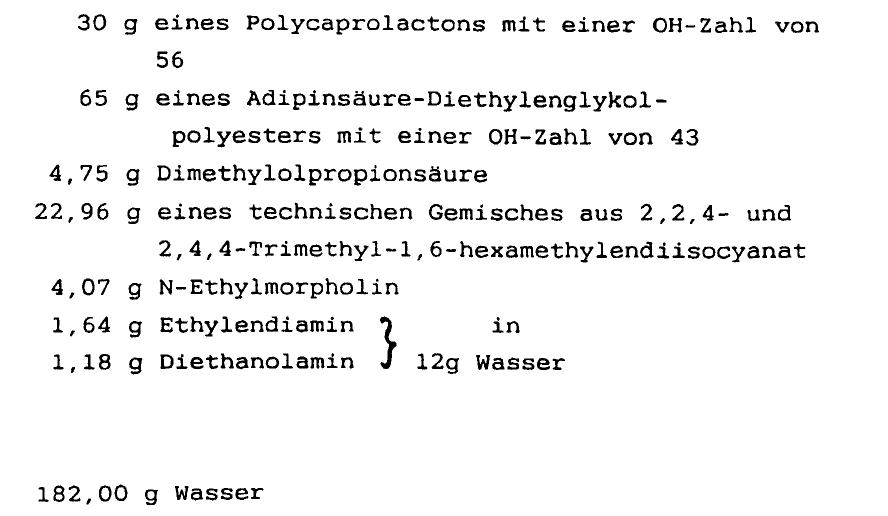

Durchführung: Analog Beispiel 13
Es entsteht eine feinteilige Dispersion mit einem Feststoffgehalt von 40% und einer Brookfield-Viskosität von 1550 mPa.s.

### BEISPIEL 16

Ansatz:

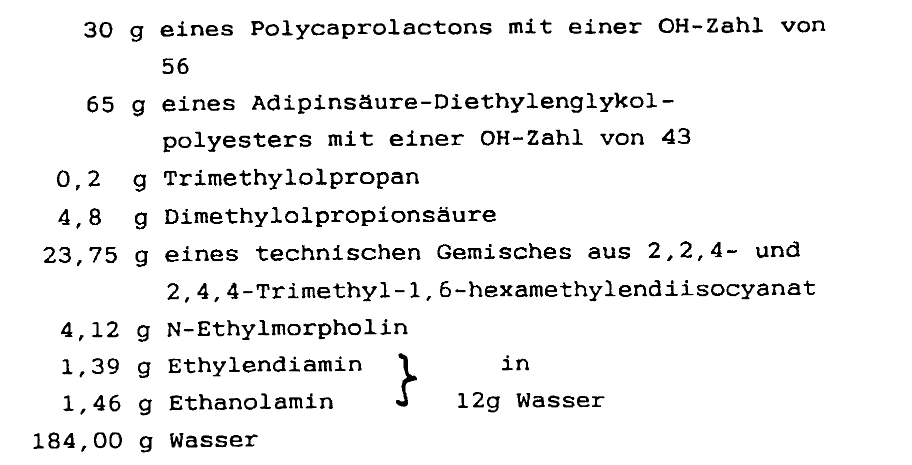

Durchführung: Analog Beispiel 13
Es entsteht eine feinteilige Dispersion mit einem Feststoffgehalt von 40% und einer Brookfield-Viskosität von 400 mPa.s.

### Vergleichsbeispiel

- Ansatz:: 88,17 g eines Polycaprolactons mit einer OH-Zahl von 56
200,72 g eines Adipinsäure-Hexandiol-Polyesters mit einer OH-Zahl von 41
14,25 g Dimethylolpropionsäure
68,12 g eines technischen Gemisches aus 2,2,4- und 2,4,4-Trimethyl-1,6-hexamethylendiisocyanat
12,23 g N-Ethylmorpholin
4,23 g Ethylendiamin in 29,4 g Wasser
552,18 g Wasser
- Durchführung:: Analog Beispiel 13
Es entsteht eine feinteilige Dispersion mit einem Feststoffgehalt von 40% und einer
Brookfield-Viskosität von 630 mPa.s.

Zur erfindungsgemäßen Verwendung der Dispersionen als Flockkleber wird wie folgt verfahren: Eine Mischung aus:
100 T Dispersion und
2-5 T eines reaktiven Melaminharz-Vorkondensates oder
2-5 T eines reaktiven Epoxidharzes
wird mittels Pinsel, Bürste oder Spritzpistole so auf das zu beflockende Substrat aufgetragen, daß eine Naßauflage von 200 bis 250 g/m² zustande kommt.

In diese Binderschicht wird Faserflock aus bevorzugt Polyamid- oder Polyesterfasern elektrostatisch eingeschossen und der Überschuß durch Absaugen entfernt. Unmittelbar danach wird das beflockte Substrat getrocknet, um die Filmbildung des Klebers einzuleiten. Nach Verdunsten des Wassers oder eventuell vorhandener Lösungsmittel (N-Methylpyrrolidon) wird bei Temperaturen oberhalb 140°C vernetzt und zweckmäßigerweise bei 180°C gesintert. Die hierbei entstehende Vergütung sicherte eine optimale Einbindung der Flockfasern und eine hohe Verankerung derselben auf dem Substrat.

Nach der Vernetzung und Vergütung werden nicht eingebundene Flockfasern durch Bürsten und Saugen entfernt. Nach dem Abkühlen auf Raumtemperatur ist die Beflockung abgeschlossen.
- Anwendungsbeispiel A:: Eine Gummimischung aus EPDM wird über Extruder und Düse zu einem Profil verarbeitet. Auf das noch warme Extrudat wird nachdem ggfs. aufgerauht wurde eine Klebermischung aus:
100 T Dispersion aus Beispiel 1 und
2 T eines reaktiven Melaminharz-Vorkondensates
aufgetragen, wobei eine Naßauflage von 215 g/m² erreicht wird. In dieses
Kleberbett wird eine Polyamidflockfaser 0,75 mm 1.5 dtex mit einer Spannung von 70 KV und einer Stromstärke von 0.02 A eingeschossen und das Ganze stufenweise bei 100, 130 und 180°C jedoch kontinuierlich getrocknet. Zum Schluß wird abgebürstet und aufgewickelt. An den so hergestellten Profilen wird eine in der Flockindustrie übliche Abriebprüfung z.B. gemäß Opel-Prüfverfahren - GME 60248 - durchgeführt.
- Anwendungsbeispiel B:: Analog Anwendungsbeispiel A wird ein Profil aus EPDM mit einer Klebermischung aus
100 T Dispersion aus Beispiel 3 und
3 T eines reaktiven Epoxidharzes
beschichtet, wobei eine Naßauflage von 227 g/m² erreicht wird. Die Beflokkung und anschließende Trocknung wird analog Beispiel A durchgeführt.

Zur erfindungsgemäßen Verwendung der Dispersion zur Heißsiegelverklebung wird wie folgt verfahren: Die gemäß den Beispielen hergestellten Dispersionen werden in bekannter Weise nach dem sogenannten Pastenpunktverfahren ("G.Hoff Textilberichte 6/1968, S.712", "Stukenbrock, Allgemeiner Vliesstoff-Report 7/1973, S. 176-180") auf eine Textilbahn (Gewebe, Maschenware oder Vliesstoff) aufgedruckt und anschließend bei 80-100°C getrocknet.

Da die Viskosität der erfindungsgemäßen Dispersionen für das Pastenpunktverfahren, das üblicherweise mit sogenannten Rotationsdruckschablonen auf Rotationsdruckmaschinen durchgeführt wird, nicht optimal ist, empfiehlt sich eine Viskositätsregulierung durch geeignete Druckverdickungsmittel, von denen z.B. "Acraconz B" (Bayer AG) genannt sein soll. Bei der Verdickung kann, falls noch nicht bei der Herstellung der Dispersionen geschehen, das Melaminharz-Vorkondensat oder das Epoxidharz der Druckpaste zugefügt werden. Auch der Zusatz von Entschäumern, z.B. "Antispumin DJ" (Stockhausen) ist an dieser Stelle möglich.

Für das Drucken verwendet man, wie erwähnt, Rotationsdruckschablonen mit unterschiedlicher meshZahl, der man die Viskosität der Druckpaste anpaßt.

Nach dem Trocknen findet man zwischen 5 und 55 g/m², vorzugsweise 15 bis 25 g/m², des heißsiegelfähigen Polyurethan- bzw. Polyurethanharnstoffharzes auf dem Substrat.

Eine so vorbereitete textile Warenbahn (Einlage oder Einbügelstoff) wird anschließend auf sogenannten Fixierpressen gegen ein zweites textiles Flächengebilde (Rückseite eines Bekleidungsoberstoffs) verklebt, wobei Temperaturen in der Klebefuge zwischen 140-175°C, ein Druck von 0,2- 4,0 bar und eine Verweilzeit von 12-30 Sekunden üblich sind.

Nach dem Abkühlen zeigt der Verbund bereits seine volle Adhäsion und Gebrauchstüchtigkeit.
- Anwendungsbeispiel C:: 100 T Dispersion aus Beispiel 9
3 T Melaminharz-Vorkondensat (Cassurit HML)
1,1 T Verdicker (Acraconz B)
1 T Entschäumer (Antispumin DJ)
werden miteinander vermischt und geben eine lagerstabile gebrauchsfähige Druckpaste mit einer Brookfield-Viskosität von 11400 mPa.s. Sie wurde mit einer 11 mesh-Rotationsdruckschablone auf einen Baumwollnessel von 80 g/m² (Einlagestoff) aufgedruckt und bei 100°C getrocknet. Danach ergab sich eine Trockenauflage von 15,7 g/m².

Der so vorbereitete Einlagestoff wurde unter folgenden Bedingungen gegen einen 180 g/m² schweren Oberstoff aus Polyester/Baumwolle 66:33 versiegelt.

| | |
|---|---|
| Siegeltemperatur | 150°C |
| Siegeldruck | 400 mbar |
| Siegelzeit | 15 sec |

Das so hergerichtete Laminat wies nach DIN 54310 eine Trennkraft von

| | |
|---|---|
| Original | 2750 g |
| nach einer chemischen Reinigung mit Perchlorethylen | 3000 g |
| nach einer Wäsche bei 40°C | 1750 g |

an 5 cm breiten Streifen auf.

### Anwendungs-Vergleichsbeispiel

Eine unter gleichen Bedingungen mit der nicht erfindungsgemäßen Dispersion nach Vergleichsbeispiel (ohne Aminoalkohol) hergestellte Verklebung ergab bei einer Trockenauflage von 23,3 g/m² folgende Trennkräfte:

| | |
|---|---|
| Original | 250 g |
| nach einer chemischen Reinigung mit Perchlorethylen | delaminiert |
| nach einer Wäsche bei 40°C | delaminiert |

Die mit den Dispersionen 10-12 erhaltenen Haftfestigkeiten sind in der nachfolgenden Tabelle aufgelistet.

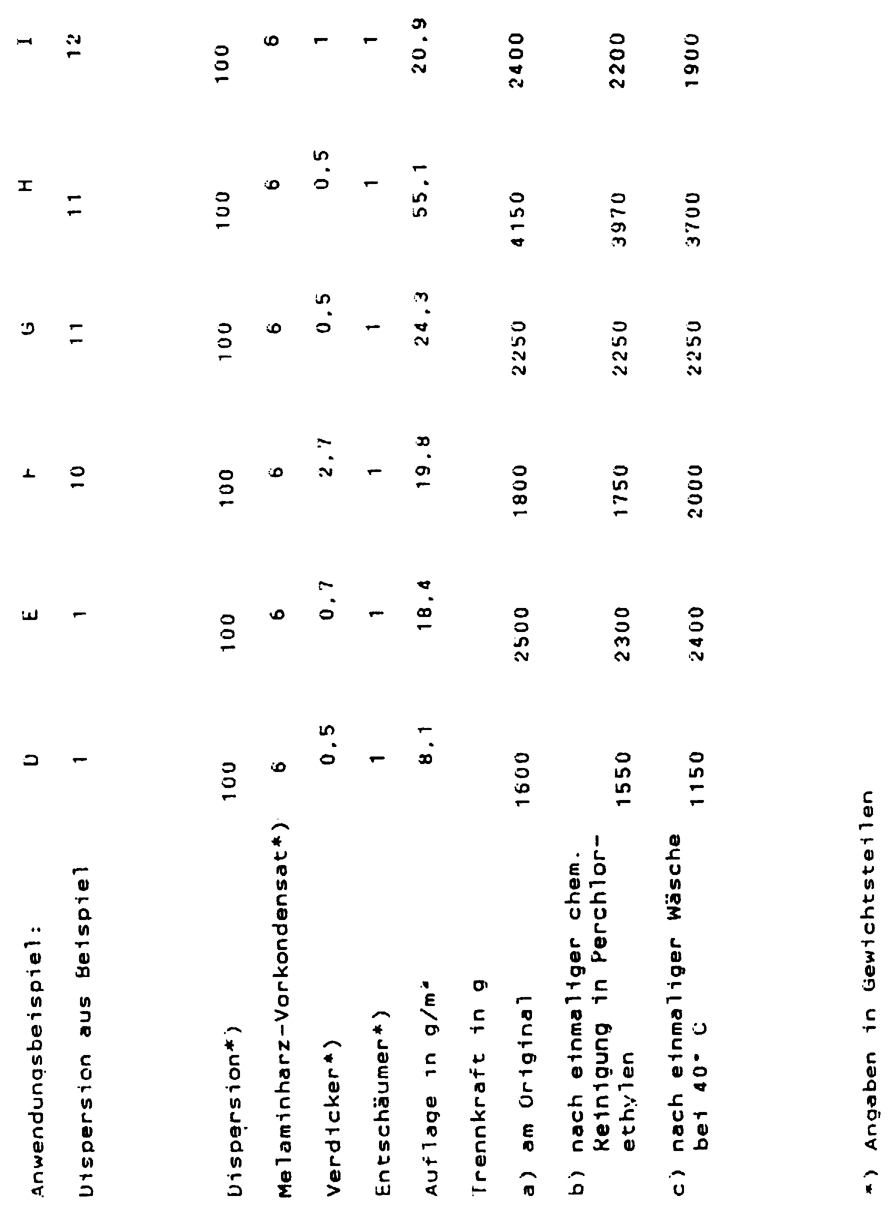

## Patentansprüche

1. Wäßrige Polyurethan- bzw. Polyurethanharnstoff-Dispersionen, erhältlich durch Umsetzung einer Mischung aus
- wenigstens einem höhermolekularen Polyol
- mit einer molaren Masse von 500 - 6000 g Mol, ggf. zusätzlich niedermolekularen Verbindungen mit einer molaren Masse von 62 - 600 g Mol und jeweils mindestens zwei gegenüber NCO-reaktiven Gruppen und
- wenigstens einer Verbindung mit mindestens zwei gegenüber NCO-reaktiven Gruppen und mindestens einer zur Ionenbildung befähigten Gruppe
mit wenigstens einem aromatischen, aliphatischen und/oder cycloaliphatischen Polyisocyanat zu einem endständig NCO-Gruppen aufweisenden Prepolymer, Neutralisation der ionenbildenden Gruppen des Prepolymeren, Kettenverlängerung und Umsetzung mit einem mindestens eine gegenüber NCO-reaktive Gruppe und mindestens eine gegenüber reaktiven Melaminharz-Vorkondensate bzw. reaktiven Epoxidharze reaktive Gruppe enthaltenden echtheitsverbessernden Modifizierungsmittel, sowie Dispergierung in Wasser, wobei die Neutralisation der ionenbildenden Gruppen vor oder während, die Kettenverlängerung und die Umsetzung mit dem echtheitsverbessernden Modifizierungsmittel vor oder nach der Dispergierung des Prepolymeren in Wasser erfolgen kann und Kettenverlängerungsmittel und Modifizierungsmittel in einer solchen Menge eingesetzt werden, daß die Zahl der gegenüber NCO-reaktiven Gruppen plus der gegenüber Melaminharz-Vorkondensaten bzw. Epoxidharzen reaktiven Gruppen die Zahl der endständigen NCO-Gruppen des Prepolymeren übersteigt, wobei als Kettenverlängerungsmittel mindestens zwei gegenüber NCO-reaktive Gruppen enthaltende niedrigmolekulare Di- und/oder Polyole, aliphatische oder aromatische Di- und/oder Polyamine, Di- und/oder Polyhydrazide, Aminohydrazide und/oder Amidine, insbesondere niedermolekulare Diamine wie Ethylendiamin und als echtheitsverbesserndes Modifizierungsmittel Aminoalkohole verwendet werden, und Zugabe von 0,5 bis 10 Gew.%, vorzugsweise 1 bis 5 Gew.% eines wasserlöslichen, reaktiven Melaminharz-Vorkondensates oder wasserlöslichen, reaktiven Epoxidharz-Vorkondensates.

2. Wäßrige Polyurethan- bzw. Polyurethanharnstoff-Dispersionen nach Anspruch 1, dadurch gekennzeichnet, daß als höhermolekulares Polyol ein höhermolekulares Polycaprolactonpolyol oder ein Gemisch aus höhermolekularem Polyesterpolyol und höhermolekularem Polycaprolactonpolyol eingesetzt wird.

3. Wäßrige Polyurethan- bzw. Polyurethanharnstoff-Dispersionen nach Anspruch 1 oder 2, dadurch gekennzeichnet, daß als höhermolekulares Polyesterpolyol ein Polyesterpolyol mit einer molaren Masse von 1000-4000 g/mol verwendet wird.

4. Wäßrige Polyurethan- bzw. Polyurethanharnstoff-Dispersionen nach Anspruch 1 oder 2, dadurch gekennzeichnet, daß als höhermolekulares Polycaprolactonpolyol ein Polycaprolactonpolyol mit einer molaren Masse von 1000-3000 g/mol verwendet wird.

5. Wäßrige Polyurethan- bzw. Polyurethanharnstoff-Dispersionen nach Anspruch 1 oder 2, dadurch gekennzeichnet, daß ein Gemisch aus einem höhermolekularen Polyesterpolyol und einem höhermolekularen Polycaprolactonpolyol im Verhältnis von 75:25 Gew.% bis 10:90 Gew.% eingesetzt wird.

6. Wäßrige Polyurethan- bzw. Polyurethanharnstoff-Dispersionen nach Anspruch 1 oder 2, dadurch gekennzeichnet, daß als niedermolekulare, mindestens zwei gegenüber NCO-reaktive Gruppen aufweisende Verbindungen Di- und/oder Polyole, aliphatische oder aromatische Di-und/oder Polyamine, Aminoalkohole oder Thiolverbindungen, vorzugsweise Trimethylolpropan oder Glycerin, verwendet werden.

7. Wäßrige Polyurethan- bzw. Polyurethanharnstoff-Dispersionen nach Anspruch 1 oder 2, dadurch gekennzeichnet, daß als Verbindung, die mindestens zwei mit NCO reagierende und mindestens eine zur Ionenbildung befähigte Gruppe enthält, ein zur Kationenbildung befähigtes tertiäres Dihydroxyamin oder eine zur Anionenbildung befähigte Dihydroxycarbonsäure, vorzugsweise Dimethylolpropionsäure, verwendet wird.

8. Wäßrige Polyurethan- bzw. Polyurethanharnstoff-Dispersionen nach Anspruch 1 oder 2, dadurch gekennzeichnet, daß ein aromatisches, aliphatisches und/oder cycloaliphatisches Diisocyanat, vorzugsweise ein technisches Gemisch aus 2,2,4- und 2,4,4-Trimethyl-1,6-hexamethylendiisocyanat, verwendet wird.

9. Verfahren zum Beflocken elastomerer Formkörper, dadurch gekennzeichnet, daß eine wäßrige Dispersion nach einem der Ansprüche 1 bis 8 ggf. nach vorheriger Verdickung, auf das Substrat aufgebracht, durch Beflocken mit textilen Kurzfasern beladen und bei erhöhter Temperatur getrocknet, kondensiert und ggf. von überschüssigem Flock befreit wird.

10. Verfahren nach Anspruch 9, dadurch gekennzeichnet, daß die zur Beflockung eingesetzte Mischung aus Polyurethan- bzw. Polyurethanharnstoff-Dispersion und wasserlöslichem reaktiven Melaminharz-Vorkondensat oder wasserlöslichen reaktiven Epoxidharzes, die ggf. einen Verdicker enthält, mittels Pinsel, Bürste oder Sprühpistole auf das zu beflockende Substrat aufgetragen wird.

11. Verfahren nach Anspruch 9, dadurch gekennzeichnet, daß zwecks Trocknung und Kondensieren Temperaturen von 70-180°C angewendet werden.

12. Verfahren nach Anspruch 9, dadurch gekennzeichnet, daß darin eine als Kleber eingesetzte Dispersion mit einer Trockenauflage von 30-160 g/m², vorzugsweise von 50-100 g/m² aufgebracht wird.

13. Verfahren nach Anspruch 9, dadurch gekennzeichnet, daß Dispersionen verwendet werden die 30-60 Gew.%, vorzugsweise 35-45 Gew.% Feststoff enthalten.

14. Verfahren zum Heißversiegeln von textilen Flächengebilden, wie Gewebe, Maschenware oder Vließstoff, dadurch gekennzeichnet, daß eine wäßrige Dispersion nach einem der Ansprüche 1-8 ggf. nach vorheriger Verdickung auf eine Lage des textilen Flächengebildes, vorzugsweise nach dem Pastenpunktverfahren aufgebracht wird, das so beschichtete textile Flächengebilde bei erhöhten Temperaturen getrocknet und ggf. später ein zweites textiles Flächengebilde unter Druck und erhöhter Temperatur mit dem ersten textilen Flächengebilde verklebt wird.

15. Verfahren nach Anspruch 14, dadurch gekennzeichnet, daß das beschichtete textile Flächengebilde bei Temperaturen von 80 bis 100°C getrocknet wird.

16. Verfahren nach Ansprüchen 14 und 15, dadurch gekennzeichnet, daß die als Heißsiegelkleber verwendete Dispersion mit einer Trockenauflage von 5 bis 25 g/m², vorzugsweise 15 bis 25 g/m², aufgebracht wird.

## Claims

1. Aqueous dispersions of polyurethane or polyurethane urea, which may be obtained by reacting a mixture of
- at least one high molecular weight polyol having a molar mass of from 500 to 6000 g/mol,
- optionally additional low molecular weight compounds each having a molar mass of from 62 to 600 g/mol and at least two groups reactive towards NCO, and
- at least one compound having at least two groups reactive towards NCO and at least one group capable of forming ions,
with at least one aromatic, aliphatic and/or cycloaliphatic polyisocyanate to form a prepolymer having terminal NCO groups, neutralizing the ion-forming groups of the prepolymer, effecting chain extension, and reacting with a fastness-improving modifying agent which contains at least one group reactive towards NCO and at least one group which is reactive towards reactive melamine resin precondensates or reactive epoxide resins, and dispersing in water, wherein neutralization of the ion-forming groups may be effected either prior to or during dispersing the prepolymer in water, chain extension and reaction with the fastness-improving modifying agent may be effected either prior to or after dispersing the prepolymer in water, and chain extender and modifying agent are used in such an amount that the number of groups reactive towards NCO plus the number of groups reactive towards melamine resin precondensates or epoxide resins exceeds the number of terminal NCO groups of the prepolymer, with low molecular weight di- and/or polyols which contain at least two groups reactive towards NCO, aliphatic or aromatic di- and/or polyamines, di- and/or polyhydrazides, aminohydrazides and/or amidines, particularly low molecular weight diamines such as ethylenediamine being used as chain extenders, and aminoalcohols being used as fastness-improving modifying agents, and adding from 0.5 to 10 wt.-%, preferably from 1 to 5 wt.-% of a water-soluble, reactive melamine resin precondensate or a watersoluble, reactive epoxide resin precondensate.

2. The aqueous polyurethane or polyurethane urea dispersions according to claim 1, characterized in that a high molecular weight polycaprolactone polyol or a mixture of a high molecular weight polyester polyol and a high molecular weight polycaprolactone polyol is used as high molecular weight polyol.

3. The aqueous polyurethane or polyurethane urea dispersions according to claim 1 or 2, characterized in that a polyester polyol having a molar mass of from 1000 to 4000 g/mol is used as high molecular weight polyester polyol.

4. The aqueous polyurethane or polyurethane urea dispersions according to claim 1 or 2, characterized in that a polycaprolactone polyol having a molar mass of from 1000 to 3000 g/mol is used as high molecular weight polycaprolactone polyol.

5. The aqueous polyurethane or polyurethane urea dispersions according to claim 1 or 2, characterized in that a mixture of a high molecular weight polyester polyol and a high molecular weight polycaprolactone polyol at a ratio of from 75:25 wt.-% to 10:90 wt.-% is used.

6. The aqueous polyurethane or polyurethane urea dispersions according to claim 1 or 2, characterized in that di- and/or polyols, aliphatic or aromatic di- and/or polyamines, aminoalcohols, or thiol compounds, preferably trimethylolpropane or glycerol, are used as low molecular weight compounds having at least two groups reactive towards NCO.

7. The aqueous polyurethane or polyurethane urea dispersions according to claim 1 or 2, characterized in that a tertiary dihydroxyamine capable of forming cations or a dihydroxycarboxylic acid capable of forming anions, preferably dimethylolpropionic acid, is used as compound containing at least two groups reacting with NCO and at least one group capable of forming ions.

8. The aqueous polyurethane or polyurethane urea dispersions according to claim 1 or 2, characterized in that an aromatic, aliphatic and/or cycloaliphatic diisocyanate, preferably a technical grade mixture of 2,2,4-and 2,4,4-trimethyl-1,6-hexamethylene diisocyanate is used.

9. A process for flock-coating elastomeric molded articles, characterized in that an aqueous dispersion according to one of claims 1 through 8, optionally after previous thickening, is applied to the substrate, loaded with textile milled fibers by flock-coating, dried at elevated temperature, condensed, and, if necessary, made free of excess flock.

10. The process according to claim 9, characterized in that the mixture employed for flocking, consisting of said polyurethane or polyurethane urea dispersion and said water-soluble, reactive melamine resin precondensate or said water-soluble, reactive epoxide resin, and optionally containing a thickener, is applied to the substrate to be flock-coated by means of a paint-brush, a brush, or a spray gun.

11. The process according to claim 9, characterized in that temperatures of from 70 to 180°C are employed for drying and condensation.

12. The process according to claim 9, characterized in that a dispersion used as an adhesive in said process is applied at a dry coating weight of from 30 to 160 g/m², preferably from 50 to 100 g/m².

13. The process according to claim 9, characterized in that dispersions having a solids content of from 30 to 60 wt.-%, preferably from 35 to 45 wt.-% are used.

14. A process for heat-sealing textile sheet materials such as woven fabrics, knitted fabrics or non-woven fabrics, characterized in that an aqueous dispersion according to one of claims 1 through 8, optionally after previous thickening, is applied to a layer of the textile sheet material, preferably using the paste spot process, the textile sheet material thus coated is dried at elevated temperature, and a second textile sheet material, optionally at a later time, is bonded to the first textile sheet material using pressure and elevated temperature.

15. The process according to claim 14, characterized in that the coated textile sheet material is dried at temperatures of from 80 to 100°C.

16. The process according to claims 14 and 15, characterized in that the dispersion used as heat-seal adhesive is applied at a dry coating weight of from 5 to 25 g/m², preferably from 15 to 25 g/m².

## Revendications

1. Dispersions aqueuses de polyuréthanne ou de polyuréthanneurée, que l'on peut obtenir par la réaction d'un mélange constitué de
- au moins un polyol de poids moléculaire élevé
- avec une masse molaire de 500 à 6000 g/mole éventuellement des composés supplémentaires de faible poids moléculaire avec une masse molaire de 62 à 600g/mole et, à chaque fois, au moins deux radicaux réactifs avec les groupes NCO et
- au moins un composé avec au moins deux radicaux réactifs avec les groupes NCO et au moins un groupe susceptible de former des ions
avec au moins un polyisocyanate aromatique, aliphatique et/ou cycloaliphatique, de manière à obtenir un prépolymère présentant des groupes NCO terminaux, la neutralisation des groupes ionogènes du prépolymère, allongement des chaînes et réaction avec au moins un groupe réactif sur les radicaux NCO et au moins un agent modificateur améliorant la solidité, contenant des radicaux réactifs sur des résines époxyde réactives ou des précondensats de résine de mélamine réactifs, ainsi que la dispersion dans de l'eau, où la neutralisation des groupes ou radicaux ionogènes peut s'opérer avant ou pendant l'allongement des chaînes et la réaction avec l'agent modificateur améliorant la solidité peut s'effectuer avant ou après la dispersion du prépolymère dans de l'eau et l'agent d'allongement des chaînes et l'agent modificateur sont utilisés en une proportion telle que le nombre des groupes réactifs sur les radicaux NCO plus celui des radicaux réactifs sur les résines époxyde ou les précondensats de résine de mélamine dépasse le nombre des radicaux NCO terminaux du prépolymère, où on utilise, à titre d'agent d'allongement des chaînes, au moins deux aminohydrazides et/ou amidines, plus particulièrement diamines de faible poids moléculaire comme l'éthylènediamine, di- et/ou polyhydrazides, di-et/ou polyamines, aliphatiques ou aromatiques, di- et/ou polyols, de faibles poids moléculaires et contenant des radicaux réactifs sur les groupes NCO et, à titre d'agent modificateur améliorant la solidité, des aminoalcools et l'addition de 0,5 à 10% en poids, de préférence, 1 à 5% en poids, d'un précondensat de résine de mélamine réactif et soluble dans l'eau, ou d'un précondensat de résine époxyde réactif et soluble dans l'eau.

2. Dispersions aqueuses de polyuréthanne ou de polyuréthanneurée suivant la revendication 1, caractérisées en ce que l'on utilise, à titre de polyol de poids moléculaire élevé, un polycaprolactonepolyol de poids moléculaire élevé, ou un mélange d'un polyesterpolyol de poids moléculaire élevé et d'un polycaprolactonepolyol de poids moléculaire élevé.

3. Dispersions aqueuses de polyuréthanne ou de polyuréthanneurée suivant la revendication 1 ou 2, caractérisées en ce que l'on utilise, à titre de polyesterpolyol de poids moléculaire élevé, un polyesterpolyol d'une masse molaire de 1000 à 4000 g/mole.

4. Dispersions aqueuses de polyuréthanne ou de polyuréthanneurée suivant la revendication 1 ou 2, caractérisées en ce que l'on utilise, à titre de polycaprolactonepolyol de poids moléculaire élevé, un polycaprolactonepolyol d'une masse molaire de 1000 à 3000 g/ mole.

5. Dispersions aqueuses de polyuréthanne ou de polyuréthanneurée suivant la revendication 1 ou 2, caractérisées en ce que l'on utilise un mélange constitué d'un polyesterpolyol de poids moléculaire élevé et d'un polycaprolactonepolyol de poids moléculaire élevé dans le rapport de 75:25% en poids à 10:90% en poids.

6. Dispersions aqueuses de polyuréthanne ou de polyuréthanneurée suivant la revendication 1 ou 2, caractérisées en ce que l'on utilise, à titre de composés de faible poids moléculaire présentant au moins deux radicaux réactifs sur les groupes NCO, des di- et/ou polyols, des composés du type thiol, des aminoalcools ou des di- et/ou polyamines, aliphatiques ou aromatiques, de préférence le triméthylolpropane ou la glycérine.

7. Dispersions aqueuses de polyuréthanne ou de polyuréthanneurée suivant la revendication 1 ou 2, caractérisées en ce que l'on utilise, à titre de composé qui contient au moins deux groupes réagissant sur les radicaux NCO et au moins un groupe susceptible de former des ions, une dihydroxylamine tertiaire, susceptible de former des cations, ou un acide dihydroxycarboxylique susceptible des former des anions, de préférence l'acide diméthylolpropionique.

8. Dispersions aqueuses de polyuréthanne ou de polyuréthanneurée suivant la revendication 1 ou 2, caractérisées en ce que l'on utilise, un diisocyanate aromatique, aliphatique et/ou cycloaliphatique, de préférence un mélange industriel de diisocyanates de 2,2,4- et 2,4,4-triméthyl-1,6-hexaméthylène.

9. Procédé pour floquer des articles moulés élastomériques, caractérisé en ce que l'on applique sur le support une dispersion aqueuse suivant l'une quelconque des revendications 1 à 8, éventuellement après épaississement préalable, on charge le tout de fibres textiles courtes par flocage et on le sèche à température élevée, on le condense et on débarrasse éventuellement du floc excédentaire.

10. Procédé suivant la revendication 9, caractérisée en ce que le mélange utilisé pour le flocage, constitué d'une dispersion de polyuréthanne ou de polyuréthanneurée et d'un précondensat de résine de mélamine réactif et soluble dans l'eau ou d'une résine époxyde réactive et soluble dans l'eau, qui contient éventuellement un épaississant, s'applique à l'aide d'un pinceau, d'une brosse ou d'un pistolet de pulvérisation sur le support à floquer.

11. Procédé suivant la revendication 9, caractérisé en ce qu'en vue du séchage et de la condensation, on utilise des températures de 70 à 180°C.

12. Procédé suivant la revendication 9, caractérisé en ce que l'on y applique une dispersion utilisée à titre de colle avec une application à sec de 30-160 g/m², de préférence 50-100 g/m².

13. Procédé suivant la revendication 9, caractérisé en ce que l'on utilise des dispersions qui contiennent 30 à 60% en poids, de préférence 35 à 45% en poids, de substance solide.

14. Procédé de thermosoudage d'articles textiles plats, comme des tissus, des produits tricotés, ou des tissus non tissés, caractérisé en ce que l'on applique sur une couche de l'article textile plat, de préférence selon le procédé à point de pâte, une dispersion aqueuse suivant l'une quelconque des revendications 1 à 8, éventuellement après épaississement préalable, on sèche l'article textile plat ainsi revêtu à des températures élevées et on colle éventuellement ultérieurement un second article textile plat, sous pression et à température élevée, sur le premier article textile plat.

15. Procédé suivant la revendication 14, caractérisé en ce que l'on sèche l'article textile plat ainsi revêtu à des températures de 80 à 100°C.

16. Procédé suivant les revendications 14 et 15, caractérisé en ce que la dispersion utilisée à titre de colle de thermosoudure est appliquée en une épaisseur à sec de 5 à 25 g/m², de préférence 15 à 25 g/m².
